# EUROPEAN PATENT APPLICATION

(11) **EP 4 718 028 A1**
(43) Date of publication of application: **01.04.2026**
(21) Application number: 23937876.3
(22) Date of filing: 22.05.2023
(51) Int. Cl.: G01C 21/00

(54) **MAP BOUNDARY EDITING METHOD AND APPARATUS, AND COMPUTER DEVICE AND STORAGE MEDIUM**

(71) Applicant: Shenzhen Mammotion Innovation Co., Limited, Shenzhen, Guangdong 518000 (CN)
(72) Inventor: WEI, Jidong, Shenzhen, Guangdong 518000 (CN); DU, Pengju, Shenzhen, Guangdong 518000 (CN); WANG, Kai, Shenzhen, Guangdong 518000 (CN); CHEN, Jianlin, Shenzhen, Guangdong 518000 (CN); TONG, Dengqiang, Shenzhen, Guangdong 518000 (CN)
(74) Representative: Huang, Liwei
(86) International application number: PCT/CN2023/095521
(87) International publication number: WO 2024/239199

(57) **Abstract**

Provided in the embodiments of the present disclosure are a map boundary editing method and apparatus, and a computer device and a storage medium. The editing method comprises: acquiring the current map information, wherein the map information comprises a closed boundary of a map; in response to a first instruction, entering an editing state of the closed boundary; acquiring movement trajectory information, wherein the movement trajectory information comprises a movement path; based on the positional relationship between the closed boundary and the movement path, determining a first line segment and a second line segment, which constitute the closed boundary, and a third line segment, the two ends of which are connected to the first line segment and the second line segment; determining a replacement line segment between the first line segment and the second line segment; and replacing the replacement line segment with the third line segment, so as to edit the closed boundary. By using the embodiments of the present disclosure, a local line segment in a closed boundary of a map can be edited, such that the editing efficiency and accuracy can be improved.

## Description

### TECHNICAL FIELD

The present disclosure relates to the field of artificial intelligence technologies, and in particular, to a map boundary editing method, apparatus, computer device, and storage medium.

### BACKGROUND

With the improvement of people's living standards and the advancement of technology, outdoor robots (for example, rescue robots, harvesting robots, exploration robots, and the like) have become increasingly important in today's society. More and more fields and positions require the participation of outdoor robots. Within a preset operation area on a map, outdoor robots record their movement positions and perform operations based on positioning information acquired by one or more positioning devices, such as a global positioning system (GPS), LiDAR, cameras, or ultrasonic sensors.

There may be needs to modify the operation area, such as expanding or shrinking it, which requires re-editing the closed boundary of the operation area. When the perimeter of the closed boundary or the area of the operation area is relatively small, the requirement can be addressed by deleting the original boundary and redefining a new boundary. However, when the perimeter of the closed boundary or the area of the operation area is relatively large, redefining a new boundary is time-consuming and labor-intensive, and may also lead to issues such as: the shape of the local boundary contour intended to be modified not meeting expectations, while the contour of the local boundary not intended to be modified being changed into an undesired shape. Therefore, how to improve the efficiency and accuracy of the map closed boundary editing method has become an urgent problem to be solved.

### SUMMARY

Embodiments of the present disclosure provide a map boundary editing method, apparatus, device, and storage medium, which can edit local line segments within a closed boundary of a map, thereby improving editing efficiency and accuracy.

In a first aspect, an embodiment of the present disclosure provides a map boundary editing method, comprising:
acquiring current map information, wherein the map information comprises a closed boundary of a map; entering an editing state of the closed boundary in response to a first instruction; acquiring movement trajectory information, wherein the movement trajectory information comprises a movement path; determining, based on a positional relationship between the closed boundary and the movement path, a first line segment and a second line segment that constitute the closed boundary, and a third line segment connected to both ends of the first line segment and the second line segment; determining a replacement line segment between the first line segment and the second line segment; and replacing the replacement line segment with the third line segment to edit the closed boundary.

In a second aspect, an embodiment of the present disclosure provides a map boundary editing apparatus, which comprises units configured to perform each of the steps in the first aspect.

In a third aspect, an embodiment of the present disclosure provides a computer device, comprising a memory and a processor connected to the memory, wherein the memory is configured to store a computer program, and the processor is configured to call the computer program to cause the computer device to execute the editing method provided in the first aspect of the embodiments of the present disclosure.

In a fourth aspect, an embodiment of the present disclosure provides a computer-readable storage medium. The computer-readable storage medium stores a computer program, and the computer program is adapted to be loaded and executed by a processor, so that a computer device having the processor executes the editing method provided in the first aspect of the embodiments of the present disclosure.

In a fifth aspect, an embodiment of the present disclosure provides a computer program product, which comprises computer instructions stored in a computer-readable storage medium. A processor of a computer device reads the computer instructions from the computer-readable storage medium and executes the computer instructions to cause the computer device to execute the editing method provided in the first aspect.

It can be seen that, in the embodiment of the present disclosure, the closed boundary of the current map enters an editing state in response to the first instruction.

Then, movement trajectory information is acquired, and based on the positional relationship between the closed boundary and the movement path in the movement trajectory information, a first line segment and a second line segment that constitute the closed boundary, and a third line segment connected to both ends of the first line segment and the second line segment are determined. Next, a replacement line segment between the first line segment and the second line segment is determined, and the replacement line segment is replaced with the third line segment to edit the closed boundary. That is, the line segments between the first line segment and the second line segment, other than the replacement line segment, are combined with the third line segment to form a new closed boundary, so that local line segments within the closed boundary of the map can be edited, thereby improving the efficiency and accuracy of editing.

### BRIEF DESCRIPTION OF THE DRAWINGS

In order to more clearly illustrate the technical solutions in the embodiments of the present disclosure or in the prior art, the accompanying drawings required for describing the embodiments or the prior art will be briefly introduced below.
It is apparent that the accompanying drawings described below are merely some embodiments of the present disclosure. For those of ordinary skill in the art, other accompanying drawings may also be obtained based on these drawings without creative efforts.
Fig. 1 is a schematic structural diagram of a network architecture provided according to an embodiment of the present disclosure;
Fig. 2 is a schematic flow diagram of a map boundary editing method provided according to an embodiment of the present disclosure;
Fig. 3A is a schematic diagram of a scenario of a map boundary editing method provided according to an embodiment of the present disclosure;
Figs. 3B to 3D are schematic diagrams of another scenario of a map boundary editing method provided according to an embodiment of the present disclosure;
Fig. 3E is a schematic diagram of a projection point provided according to an embodiment of the present disclosure;
Fig. 4 is a schematic structural diagram of a map boundary editing apparatus provided according to an embodiment of the present disclosure;
Fig. 5 is a schematic structural diagram of a computer device provided according to an embodiment of the present disclosure.

### DESCRIPTION OF EMBODIMENTS

The terms "first," "second," and the like as used in the specification, claims, and drawings of the present disclosure are employed merely to distinguish between different objects and are not intended to denote any particular order. Furthermore, the terms "comprise" and "have," as well as any variations thereof, are intended to cover non-exclusive inclusion. For example, a process, method, system, product, or apparatus that includes a series of steps or units is not limited to the listed steps or units but may optionally include other steps or units not listed, or may optionally include other steps or units inherent to such process, method, system, product, or apparatus. The term "plurality" may refer to two or more, and will not be further described hereinafter.

The term "embodiment" as used herein means that a particular feature, structure, or characteristic described in connection with the embodiment may be included in at least one embodiment of the present disclosure. The appearances of the phrase at various places in the specification are not necessarily all referring to the same embodiment, nor are they mutually exclusive alternative or independent embodiments. It will be understood by those skilled in the art, both explicitly and implicitly, that the embodiments described herein may be combined with other embodiments.

The technical solutions of the embodiments of the present disclosure will be described clearly and fully below in conjunction with the accompanying drawings of the embodiments of the present disclosure. It is apparent that the described embodiments are merely a portion of the embodiments of the present disclosure and not all of them. All other embodiments obtained by a person of ordinary skill in the art based on the embodiments of the present disclosure without creative effort fall within the scope of protection of the present disclosure.

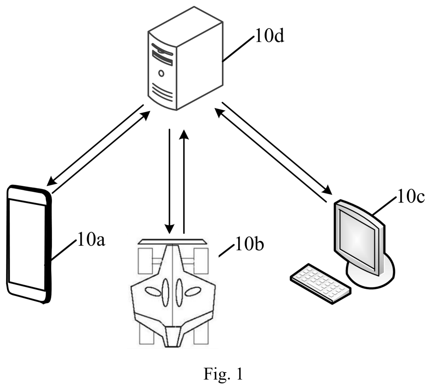

Please refer to Fig. 1, which is a schematic structural diagram of a network architecture provided according to an embodiment of the present disclosure. As shown in Fig. 1, the network architecture may include a server 10d and a user terminal cluster, where the user terminal cluster may include one or more user terminals, and no limitation is imposed on the number of user terminals herein. As shown in Fig. 1, the user terminal cluster may specifically include a user terminal 10a, a user terminal 10b, and a user terminal 10c.

The server 10d may be an independent physical server, or a server cluster or distributed system composed of multiple physical servers, or may be a cloud server providing basic cloud computing services such as cloud services, cloud databases, cloud computing, cloud functions, cloud storage, network services, cloud communication, middleware services, domain name services, security services, content delivery network (CDN), as well as big data and artificial intelligence platforms.

In the embodiment of the present disclosure, the user terminal may include a mobile phone as shown in user terminal 10a of Fig. 1, or may include tablet computers or wearable electronic devices with wireless communication functions (such as smart watches, smart bracelets, etc.). Exemplary portable electronic devices include, but are not limited to, portable electronic devices running the iOS system, Android system, Microsoft system, or other operating systems. The portable electronic device may also be other portable electronic devices, such as a laptop computer. It should be understood that in some other embodiments, the electronic device may not be a portable electronic device, but a desktop computer as shown in user terminal 10c of Fig. 1.

The user terminal may also include outdoor robots, such as search-and-rescue robots, harvesting robots, exploration robots, and so forth, which are not limited herein. For example, the user terminal 10b in Fig. 1 is a harvesting robot.

As shown in Fig. 1, the user terminal 10a, user terminal 10b, and user terminal 10c may each be connected to the server 10d via a network, so that each user terminal may perform data interaction with the server 10d through the network connection. For example, user A may send an operation instruction to the server 10d via user terminal 10a to control user terminal 10b to perform an operation through the server 10d; or user B may send a movement instruction to the server 10d via user terminal 10a to control the user terminal 10b to move along a path indicated by the movement instruction via the server 10d.

The user terminal 10a, user terminal 10b, and user terminal 10c may also be interconnected to perform data interaction. For example, user A may send an operation instruction to user terminal 10b from user terminal 10a to control the user terminal 10b to perform an operation; or user B may send a movement instruction to user terminal 10b from user terminal 10a to control the user terminal 10b to move along a path indicated by the movement instruction.

In the embodiment of the present disclosure, the operation area and the closed boundary corresponding to the operation area, the operation path, and the like may be uploaded to the server for storage, or stored on a blockchain. The blockchain referred to in the embodiments of the present disclosure is a novel application model of computer technologies such as distributed data storage, peer-to-peer transmission, consensus mechanism, and cryptographic algorithms. Essentially, the blockchain is a decentralized database, which is a chain of data blocks generated in association by cryptographic methods. Each data block contains information on a batch of network transactions for verifying the validity (anti-counterfeiting) of its information and generating the next block. The blockchain may include a blockchain underlying platform, a platform product service layer, and an application service layer. In this way, by storing data in a distributed manner on the blockchain, data security can be ensured while data sharing between different platforms can be realized.

An embodiment of the present disclosure provides a map boundary editing method, apparatus, device, and storage medium, which can edit local line segments within a closed boundary of a map, thereby improving editing efficiency and accuracy.

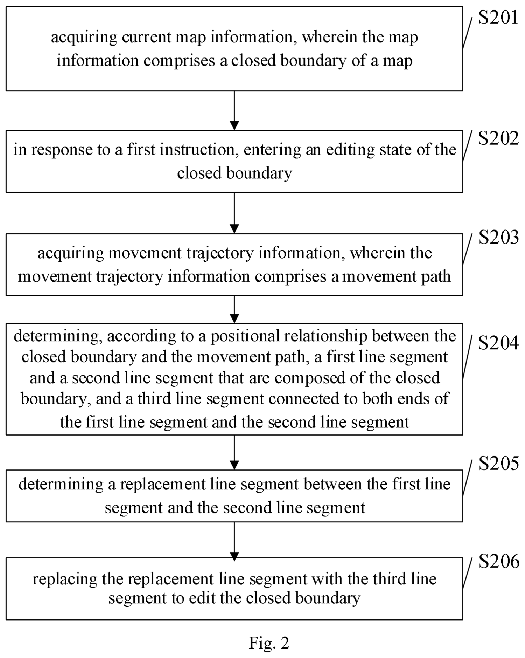

The map boundary editing method provided in the embodiments of the present disclosure will be described in detail below. Please refer to Fig. 2, which is a schematic flow diagram of a map boundary editing method according to an embodiment of the present disclosure. The editing method may be executed by a computer device, which may be a server (for example, the server 10d in the embodiment shown in Fig. 1), or a user terminal (for example, any user terminal in the user terminal cluster shown in Fig. 1), or a computer program (including program code), and the like. As shown in Fig. 2, the editing method comprises steps S201 to S206, wherein:
S201. Acquiring current map information, wherein the map information comprises a closed boundary of a map.

In the embodiment of the present disclosure, the current map information may be map information of a map displayed on a user terminal, or may include map information of a map targeted by an editing request or other requests, and is not limited herein. The map information may comprise the closed boundary of the map, or may comprise a first set of points having positioning information. The closed boundary may be obtained by connecting the first set of points and is used to indicate the range of an operation area corresponding to the map, so that an outdoor robot can perform operations within the operation area.

The positioning information may include physical location and orientation information, and may be acquired by one or more positioning devices of the outdoor robot such as GPS, LiDAR, cameras, or ultrasonic sensors. The acquisition method may be based on real-time kinematic (RTK) carrier-phase differential technology. The positioning information may be acquired during the movement of the outdoor robot, or may be acquired based on data (such as images) collected when the outdoor robot moves, or may be acquired by moving a positioning device carried by the outdoor robot or independently deployed.

The number of points in the first set of points may be greater than two and is not limited herein. The distances between the points may be equal or unequal. That is, when the outdoor robot or positioning device acquires the positioning information of the points in the first set of points, the time intervals of moving from one point to another point may be equal or unequal.

Optionally, after acquiring the first set of points, the editing method may further comprise: connecting the points in the first set of points to obtain a reference boundary; and performing smoothing processing on the reference boundary to obtain the closed boundary of the map. In this way, the accuracy and visual appearance of the closed boundary can be improved, and jagged boundaries on the display interface can be avoided.

S202. In response to a first instruction, entering an editing state of the closed boundary.

In the embodiment of the present disclosure, the first instruction is used to indicate entering the editing state of the closed boundary, so as to enable a user to edit the closed boundary displayed on the user terminal, or to enable the original closed boundary to be automatically edited along with the movement trajectory of an outdoor robot or a positioning device when moving or being moved. Optionally, after receiving the first instruction, the method may further control the outdoor robot or the positioning device to move, or notify the user to move the outdoor robot or the positioning device, so as to obtain a new closed boundary or a local line segment within the closed boundary.

S203. Acquiring movement trajectory information, wherein the movement trajectory information comprises a movement path.

In the embodiment of the present disclosure, the movement trajectory information may include a movement path or a second set of points with positioning information, which is obtained when the outdoor robot or positioning device moves or is moved. The movement path may be obtained by connecting the second set of points, wherein the positioning information may refer to the foregoing description, and the second set of points may refer to the description of the first set of points, which will not be repeated herein.

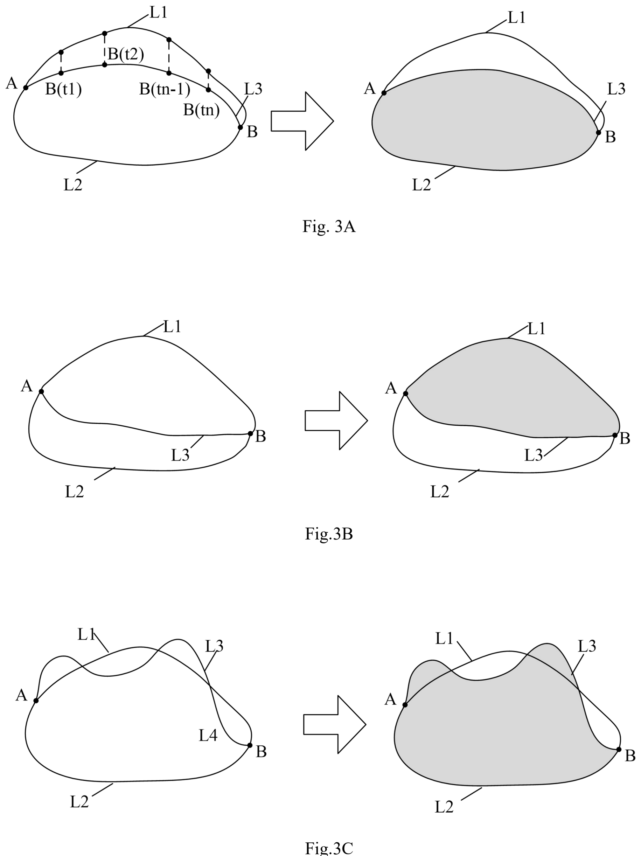

By way of example, the second set of points may include n+2 points. Please refer to Fig. 3A, which is a schematic diagram of a scenario of the map boundary editing method provided in the embodiment of the present disclosure. As shown in Fig. 3A, n may be greater than or equal to 2. In practice, n may also be 0 or 1. The points in the second set of points may include point A, point B, and points B(t1), B(t2), B(tn-1), and B(tn) corresponding to time points t1, t2, tn-1, and tn, respectively. The distances or movement time intervals between these points may be equal. For example, the time interval from the position corresponding to point A to the position corresponding to point B(t1) may be 2 seconds, and the time interval from the position corresponding to point B(t1) to the position corresponding to point B(t2) may also be 2 seconds. Alternatively, the distances or movement time intervals between these points may be unequal. For example, the time interval from the position corresponding to point A to the position corresponding to point B(t1) may be 2 seconds, while the time interval from the position corresponding to point B(t1) to the position corresponding to point B(t2) may be 5 seconds.

The movement trajectory information may be acquired after the outdoor robot or the positioning device receives a movement instruction from the user, and the movement instruction may be used to trigger the movement. Optionally, the movement instruction may include a starting reference position. The starting reference position may be understood as a starting position pre-designated by the user, so that movement can be performed based on the starting reference position. The starting reference position may be edited by the user on the map display interface. For example, the user may click a position on the closed boundary of the map and set the position as the starting reference position.

Considering the actual conditions of the operation area and the movement of the device, the starting reference position and the actual starting position of the movement may be the same or different. Optionally, the distance between the starting reference position and the actual starting position of the movement may be less than a threshold A. The threshold A may be a fixed value, such as a value between 5 cm and 50 cm, or may be a dynamically varying value, such as a value determined based on the area size of the ground. In this way, a large deviation between the actual starting position of the movement and the preset starting reference position can be avoided.

Optionally, the movement instruction may include an ending reference position. The ending reference position may be understood as an ending position pre-designated by the user, so that the movement can be stopped based on the ending reference position.
The ending reference position may be edited by the user on the map display interface. For example, the user may click a position on the closed boundary of the map and set the position as the ending reference position.

Considering the actual conditions of the operation area and the movement of the device, the ending reference position and the actual ending position of the movement may be the same or different. The distance between the ending reference position and the actual ending position of the movement may be less than a threshold B, for example, the same as threshold A or another threshold. The threshold B may refer to the description of threshold A and will not be repeated herein.

Optionally, the movement instruction may include a movement reference path. The movement reference path may be understood as a movement path designated by the user, so that the movement can be performed based on the movement reference path.
The movement reference path may be edited by the user on the map display interface.
For example, the user may connect the starting reference position and the ending reference position by using a curve tool in a drawing tool. As another example, the user may first click a position on the closed boundary of the map, and then start sliding or dragging a cursor until the operation stops, where the starting position of the operation may serve as the starting reference position. If no continuous sliding or dragging operation of the cursor position is performed within a preset duration (for example, 1 second) after the operation stops, then the stopping position may serve as the ending reference position, and the sliding or dragging path may serve as the movement reference path.

Considering the actual conditions of the operation area and the movement of the device, the movement reference path and the actual movement path may be the same or different. Optionally, the editing method may further comprise: performing smoothing processing on the movement reference path. In this way, unsmooth line segments in the movement path caused by user hand tremors or the like can be avoided, which is conducive to improving the accuracy and visual appearance of the edited boundary and avoiding jagged boundaries on the display interface.

S204. Determining, based on a positional relationship between the closed boundary and the movement path, a first line segment and a second line segment that constitute the closed boundary, and a third line segment connected to both ends of the first line segment and the second line segment.

In the embodiment of the present disclosure, the first line segment, the second line segment, and the third line segment have the same endpoint positions. The first line segment and the second line segment are line segments on the closed boundary, while the third line segment is a line segment outside the closed boundary. The first line segment and the second line segment may be understood as portions of the closed boundary to be replaced, while the third line segment is a target boundary used to replace the replacement line segment between the first line segment and the second line segment.
The third line segment may be a line segment within the operation area of the map that does not overlap the closed boundary, so that the map boundary can be edited to reduce the area of the operation area and modify the contour and perimeter of the operation area.
Alternatively, the third line segment may be a line segment outside the operation area, so that the map boundary can be edited to enlarge the area of the operation area and modify the contour and perimeter of the operation area.

By way of example, please refer to Figs. 3A to 3D, where Figs. 3B to 3D are schematic diagrams of another scenario of the map boundary editing method provided in the embodiment of the present disclosure. The starting position may be the position corresponding to point A, and the ending position may be the position corresponding to point B. As shown in Figs. 3A to 3D, the outdoor robot or the positioning device may move from the starting position to the ending position along the path of the third line segment L3. The closed boundary of the map is divided into the first line segment L1 and the second line segment L2 through the starting position and the ending position. The third line segment L3 is a line segment outside the closed boundary. The two endpoints of the first line segment L1, the second line segment L2, and the third line segment L3 are both point A and point B.

In some feasible examples, step S204 may comprise the following sub-steps:
determining, at least two target points in the first set of points and at least two reference points in the second set of points based on the positional relationship between the closed boundary and the movement path; dividing the closed boundary into the first line segment and the second line segment based on the at least two target points; processing the movement path into a valid line segment based on the at least two reference points; and obtaining the third line segment connected to both ends of the first line segment and the second line segment based on the at least two target points and the valid line segment.

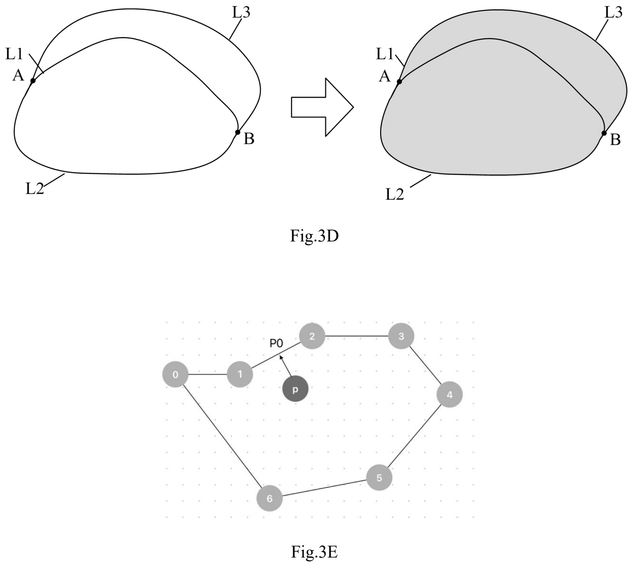

The target points and the reference points may be overlapping points between the first set of points and the second set of points, or the target points may be projection points of the reference points on the closed boundary. A projection point refers to a point on the multiple line segments of the closed boundary that is closest to the reference point, such that the distance between the target point and the reference point is minimized. By way of example, please refer to Fig. 3E, which is a schematic diagram of a projection point provided in the embodiment of the present disclosure. As shown in Fig. 3E, the closed boundary may be divided into six line segments 0-1, 1-2, 2-3, 3-4, 4-5, and 5-6 based on point indices. If the shortest distance between point P and the six line segments is calculated and it is found that the distance between point P and point P0 on the line segment 1-2 is the smallest, then point P0 may serve as the projection point of point P on the closed boundary.

The target points and the reference points may be points within a preset region.
For example, the distance between each target point in the first set of points and at least one reference point in the second set of points may be less than a first threshold. The first threshold may refer to the description of the threshold A mentioned above, which will not be repeated herein.

It can be understood that if the reference points are overlapping points between the first set of points and the second set of points, the reference points are located on the closed boundary and can serve as endpoints of the replacement line segment, thereby determining the first line segment, the second line segment, and the third line segment.
Considering the actual conditions of the operation area and the movement of the device, overlapping points may not exist between the first set of points and the second set of points.
Therefore, using points in the first set of points and the second set of points that are close to each other (for example, having a distance less than the first threshold) as target points and reference points respectively to determine the first line segment, the second line segment, and the third line segment can improve the efficiency and accuracy of editing.

It should be noted that the target points and the reference points may be determined simultaneously based on the positional relationship between the closed boundary and the movement path, or the reference points may be determined first and then the target points may be determined, for example, by using the target points as projection points of the reference points on the closed boundary to determine the target points. Alternatively, the target points may be determined first and then the reference points may be determined.

A method for individually determining target points is described below.

In some feasible examples, the editing method may further comprise:
in response to a second instruction, enlarging and displaying a region corresponding to the closed boundary; and receiving indication information, the indication information being used to determine at least two target points.

The second instruction is used to indicate enlarging and displaying the region corresponding to the closed boundary, which may specifically be the region corresponding to the cursor position in the map display interface, or the closed boundary itself, or a region where the distances between points in the first set of points and the second set of points are less than a preset threshold, and is not limited herein. Optionally, the second instruction may include a designated region, so that the designated region of the map can be enlarged.

It can be understood that after the region corresponding to the closed boundary is enlarged and displayed, it becomes convenient for the user to select target points, which is conducive to improving the accuracy of editing the boundary. If the indication information is received, the target points can be determined based on the indication information, which can improve the efficiency of determining the target points.
Optionally, reference points may also be determined based on the indication information or other indication information.

In the embodiment of the present disclosure, if the number of target points is two, the closed boundary can be divided into two line segments, namely the first line segment and the second line segment, based on the two target points. If the number of target points is greater than two, two endpoints may be determined first, and then the closed boundary may be divided into two line segments, namely the first line segment and the second line segment, based on the two endpoints. The two endpoints may be determined based on the positioning information of the target points among at least two target points, such as the two endpoints that are relatively farthest apart.

The valid line segment may be smoothed based on the positioning information of the reference points, so as to eliminate unsmooth line segments in the movement path, which is conducive to improving the accuracy and visual appearance of the edited boundary and avoiding jagged boundaries on the display interface. Before processing the valid line segment, the reference points may also be processed to improve the efficiency and validity of processing the line segment.

Optionally, the editing method may further comprise: when a closed contour exists in the movement path, determining an area and/or a perimeter of the closed contour;
when the area is less than a second threshold or the perimeter is less than a third threshold, deleting points corresponding to the closed contour in the movement path;
or when the area is greater than a fourth threshold or greater than a fifth threshold, returning to step S203.

The second threshold is smaller than the fourth threshold, and the third threshold is smaller than the fifth threshold. It can be understood that if a closed contour with a small area or short perimeter appears during the movement, it indicates that the closed contour may be caused by misoperation, and the points corresponding to the closed contour may be ignored and thus deleted, which can improve the validity of the second set of points. If a closed contour with a large area or long perimeter appears, it indicates that a deviation may have occurred during movement, and the movement needs to be performed again to obtain a movement path that meets the requirements, which can improve the validity of the second set of points.

In the embodiment of the present disclosure, the third line segment is connected to both ends of the first line segment and the second line segment, so that the third line segment can be determined based on the first line segment and the second line segment on the basis of the movement path. As described above, the valid line segment of the movement path may be determined based on at least two reference points, and the first line segment and the second line segment are obtained based on at least two target points. The third line segment may be obtained based on the at least two target points and the valid line segment, which can improve the validity and accuracy of processing the third line segment.

S205. Determining a replacement line segment between the first line segment and the second line segment.

The present disclosure does not limit the method for determining the replacement line segment. Two exemplary methods are described below, wherein:
Method 1: obtaining the replacement line segment between the first line segment and the second line segment in response to a third instruction.
Method 2: determining the replacement line segment between the first line segment and the second line segment based on a first relative positional relationship between the first line segment and the third line segment, and a second relative positional relationship between the second line segment and the third line segment;or determining the replacement line segment between the first line segment and the second line segment based on a first area of a first closed contour formed by the first line segment and the third line segment, and a second area of a second closed contour formed by the second line segment and the third line segment; or determining the replacement line segment between the first line segment and the second line segment based on a first perimeter of the first closed contour formed by the first line segment and the third line segment, and a second perimeter of the second closed contour formed by the second line segment and the third line segment.
Method 1 may be understood as a user-selected scheme, and Method 2 may be understood as a scheme selected based on a preset algorithm. Before execution, the closed contour formed by the first line segment and the third line segment and/or the closed contour formed by the second line segment and the third line segment may be displayed. By displaying these closed contours, it becomes easier for the user to select the replacement line segment between the first line segment and the second line segment, so as to generate the third instruction.

The relative positional relationship may be understood as a relative distance. A line segment with a relatively closer or farther distance from the third line segment may be used as the replacement line segment. The replacement line segment may also be a line segment where the closed contour has a relatively smaller or larger area, or a line segment where the closed contour has a relatively shorter or longer perimeter.

By way of example, taking "relatively closer distance" and "smaller area," Method 2 may be described with reference to the scenarios shown in Figs. 3A and 3D, where the operation area after editing the closed boundary may be as shown in the shaded area of the figure. As shown in Figs. 3A, 3C, and 3D, the relative distance between the first line segment L1 and the third line segment L3 is closer than the relative distance between the second line segment L2 and the third line segment L3, so the first line segment L1 appears to be the one to be replaced, and thus the first line segment L1 may be determined as the replacement line segment. In addition, the area of the closed contour formed by the first line segment L1 and the third line segment L3 is smaller than the area of the closed contour formed by the second line segment L2 and the third line segment L3, and may be considered as a non-target operation area, so the first line segment L1 may be determined as the replacement line segment. As shown in Fig. 3B, the relative distance between the second line segment L2 and the third line segment L3 is closer than the relative distance between the first line segment L1 and the third line segment L3, and the area of the closed contour formed by the second line segment L2 and the third line segment L3 is smaller than the area of the closed contour formed by the first line segment L1 and the third line segment L3, so the second line segment L2 may be determined as the replacement line segment.

It should be understood that the above methods for determining the replacement line segment are merely examples. In practice, other methods may also be used to determine the replacement line segment. For example, if there is a non-operation area or restricted area in the operation area corresponding to the closed contour formed by the first line segment and the third line segment, and the operation area corresponding to the closed contour formed by the second line segment and the third line segment is entirely an operation area or has no restricted area, then the first line segment may be determined as the replacement line segment. When determining the replacement line segment, it is not necessary to calculate the actual area or perimeter of the closed contour, but an estimation of the closed contour may be used.

Optionally, the editing method may further comprise: checking the closed contour formed by the first line segment L1 and the third line segment L3, and checking the closed contour formed by the second line segment L2 and the third line segment L3.
The checking may include checking of simply connected closed contours or multiply connected closed contours. Line segments determined as non-compliant through the checking may be used as the replacement line segment, which can improve the accuracy of editing.

S206. Replacing the replacement line segment with the third line segment to edit the closed boundary.

In the method shown in Fig. 2, in response to the first instruction, the closed boundary of the current map enters an editing state. Then, movement trajectory information is acquired, and based on the positional relationship between the closed boundary and the movement path in the movement trajectory information, a first line segment and a second line segment that constitute the closed boundary, and a third line segment connected to both ends of the first line segment and the second line segment are determined. Next, a replacement line segment between the first line segment and the second line segment is determined, and the replacement line segment is replaced with the third line segment to edit the closed boundary. That is, the line segments between the first line segment and the second line segment, other than the replacement line segment, are combined with the third line segment to form a new closed boundary.
In this way, local line segments within the closed boundary of the map can be edited, thereby improving the efficiency and accuracy of editing.

An apparatus based on the embodiments of the present disclosure is provided below, based on the detailed description of the method in the foregoing embodiments.

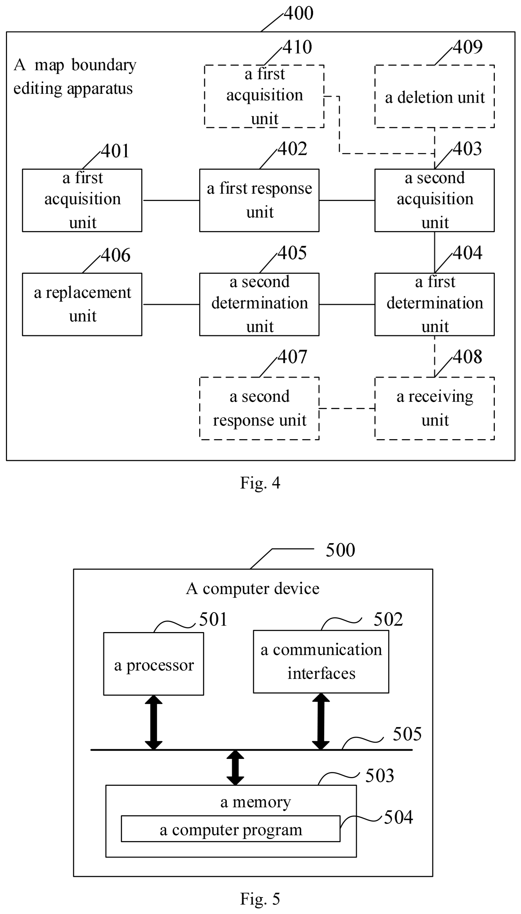

Please refer to Fig. 4, which is a schematic structural diagram of a map boundary editing apparatus provided based on an embodiment of the present disclosure.
As shown in Fig. 4, the map boundary editing apparatus 400 comprises a first acquisition unit 401, a first response unit 402, a second acquisition unit 403, a first determination unit 404, a second determination unit 405, and a replacement unit 406, wherein:
the first acquisition unit 401 is configured to acquire current map information, wherein the map information comprises a closed boundary of a map;
the first response unit 402 is configured to, in response to a first instruction, enter an editing state of the closed boundary;
the second acquisition unit 403 is configured to acquire movement trajectory information, wherein the movement trajectory information comprises a movement path;
the first determination unit 404 is configured to determine, based on a positional relationship between the closed boundary and the movement path, a first line segment and a second line segment that constitute the closed boundary, and a third line segment connected to both ends of the first line segment and the second line segment;
the second determination unit 405 is configured to determine a replacement line segment between the first line segment and the second line segment; and
the replacement unit 406 is configured to replace the replacement line segment with the third line segment to edit the closed boundary.

In some feasible examples, the closed boundary is obtained by connecting a first set of points having positioning information, and the movement path is obtained by connecting a second set of points having positioning information. The first determination unit 404 is specifically configured to: determine, at least two target points in the first set of points and at least two reference points in the second set of points based on the positional relationship between the closed boundary and the movement path; divide the closed boundary into the first line segment and the second line segment based on the at least two target points; process the movement path into a valid line segment based on the at least two reference points; and obtain the third line segment connected to both ends of the first line segment and the second line segment based on the at least two target points and the valid line segment.

In some feasible examples, the distance between each target point in the first set of points and at least one reference point in the second set of points is less than a first threshold.

In some feasible examples, the editing apparatus 400 further comprises a second response unit 407 and a receiving unit 408. The second response unit 407 is configured to, in response to a second instruction, enlarge and display a region corresponding to the closed boundary. The receiving unit 408 is configured to receive indication information, the indication information being used to determine the at least two target points.

In some feasible examples, the editing apparatus 400 further comprises a deletion unit 409 and an invoking unit 410. The deletion unit 409 is configured to, when a closed contour exists in the movement path and an area of the closed contour is less than a second threshold and/or a perimeter of the closed contour is less than a third threshold, delete points corresponding to the closed contour in the movement path. The invoking unit 410 is configured to, when the closed contour exists in the movement path and an area of the closed contour is greater than a fourth threshold and/or a perimeter of the closed contour is greater than a fifth threshold, invoke the second acquisition unit 403.

In some feasible examples, the second determination unit 405 is specifically configured to obtain the replacement line segment between the first line segment and the second line segment in response to a third instruction.

In some feasible examples, the second determination unit 405 is specifically configured to determine the replacement line segment between the first line segment and the second line segment based on a relative positional relationship between the first line segment and the third line segment, and a relative positional relationship between the second line segment and the third line segment; or to determine the replacement line segment between the first line segment and the second line segment based on an area of a closed contour formed by the first line segment and the third line segment, and an area of a closed contour formed by the second line segment and the third line segment;
or to determine the replacement line segment between the first line segment and the second line segment based on a perimeter of a closed contour formed by the first line segment and the third line segment, and a perimeter of a closed contour formed by the second line segment and the third line segment.

The implementation of the above units may refer to the relevant descriptions of the method embodiments shown in Fig. 2, which will not be repeated here.

Please refer to Fig. 5, which is a schematic structural diagram of a computer device provided based on an embodiment of the present disclosure. The computer device 500 comprises a processor 501, a communication interface 502, and a memory 503. The processor 501, the communication interface 502, and the memory 503 may be connected to each other through a bus 505, or may be connected in other ways. The related functions implemented by the first acquisition unit 401, the first response unit 402, the second acquisition unit 403, the first determination unit 404, the second determination unit 405, the replacement unit 406, the second response unit 407, the deletion unit 409, and the invoking unit 410 shown in Fig. 4 may be implemented by one or more processors 501.The related functions implemented by the receiving unit 408 may be implemented by one or more communication interfaces 502.

The processor 501 comprises one or more processors, for example, one or more central processing units (CPUs). When the processor 501 is a CPU, the CPU may be a single-core CPU or a multi-core CPU. In the embodiment of the present disclosure, the processor 501 is configured to control the computer device 500 to implement the embodiment shown in Fig. 2.

The communication interface 502 is configured to implement communication with other devices. For example, if the computer device 500 is a user terminal, the communication interface 502 may implement communication between the user terminal and devices such as a server. If the computer device 500 is a server, the communication interface 502 may implement communication between the server and devices such as user terminals.

The memory 503 includes but is not limited to a random access memory (RAM), a read-only memory (ROM), an erasable programmable read-only memory (EPROM), or a compact disc read-only memory (CD-ROM). The memory 503 is used to store relevant instructions and data. In the embodiment of the present disclosure, the memory 503 stores a computer program 504, and the processor 501 is configured to call the computer program 504. The computer program 504 comprises instructions for executing the steps in the embodiment shown in Fig. 2.

The embodiment of the present disclosure further provides a computer-readable storage medium, in which a computer program executed by the aforementioned map boundary editing apparatus is stored. The computer program comprises program instructions, which, when executed by the processor, can implement the description of the map boundary editing method corresponding to the embodiment shown in Fig. 2.
Therefore, detailed description will not be repeated here. In addition, the description of the advantageous effects of using the same method will not be repeated here either.
For the technical details not disclosed in the computer-readable storage medium embodiment involved in the present disclosure, please refer to the description of the method embodiments of the present disclosure. As an example, the program instructions may be deployed on a single computing device for execution, or may be executed on multiple computing devices located at one site, or may be executed on multiple computing devices distributed across multiple sites and interconnected via a communication network. Multiple computing devices distributed across multiple sites and interconnected via a communication network may form a blockchain system.

In addition, it should be noted that the embodiment of the present disclosure further provides a computer program product or a computer program. The computer program product or computer program may comprise computer instructions, and the computer instructions may be stored in a computer-readable storage medium. The processor of the computer device reads the computer instructions from the computer-readable storage medium and executes the computer instructions, so that the computer device implements the description of the map boundary editing method corresponding to the embodiment shown in Fig. 2. Therefore, detailed description will not be repeated here.
In addition, the description of the advantageous effects of using the same method will not be repeated here either. For the technical details not disclosed in the computer program product or computer program embodiment involved in the present disclosure, please refer to the description of the method embodiments of the present disclosure.

It should be noted that, for the foregoing method embodiments, for ease of description, they are all described as a series of combined actions. However, it should be understood by those skilled in the art that the present disclosure is not limited by the sequence of actions described, because based on the present disclosure, some steps may be performed in other sequences or concurrently. Secondly, it should also be understood by those skilled in the art that the embodiments described in the specification are all preferred embodiments, and the actions and modules involved are not necessarily essential to the present disclosure.

It can be understood that, in the specific implementations of the present disclosure, data of users, enterprises, institutions, and the like may be involved.
When the embodiments of the present disclosure are applied to specific products or technologies, permission or consent from users, enterprises, institutions, and the like is required, and the collection, use, and processing of the relevant data need to comply with relevant laws, regulations, and standards of the corresponding countries and regions.

The steps in the method embodiments of the present disclosure may be adjusted, combined, or deleted based on actual needs.

The modules in the apparatus embodiments of the present disclosure may be merged, divided, or deleted based on actual needs.

Those of ordinary skill in the art can understand that the implementation of all or part of the processes in the foregoing method embodiments may be accomplished by instructing related hardware through a computer program. The computer program may be stored in a computer-readable storage medium. When executed, the program may include the processes of the method embodiments as described above. The storage medium may be a magnetic disk, an optical disk, a read-only memory (ROM), or a random access memory (RAM), and the like.

The above descriptions are merely preferred embodiments of the present disclosure and should not be used to limit the scope of the present disclosure.
Therefore, equivalent changes made based on the claims of the present disclosure still fall within the scope of the present disclosure.

## Claims

1. A map boundary editing method, comprising:
acquiring current map information, wherein the map information comprises a closed boundary of a map;
in response to a first instruction, entering an editing state of the closed boundary;
acquiring movement trajectory information, wherein the movement trajectory information comprises a movement path;
determining, based on a positional relationship between the closed boundary and the movement path, a first line segment and a second line segment that constitute the closed boundary, and a third line segment connected to both ends of the first line segment and the second line segment;
determining a replacement line segment between the first line segment and the second line segment; and
replacing the replacement line segment with the third line segment to edit the closed boundary.

2. The map boundary editing method according to claim 1, wherein the closed boundary is obtained by connecting a first set of points having positioning information, and the movement path is obtained by connecting a second set of points set having positioning information;
wherein determining, based on the positional relationship between the closed boundary and the movement path, the first line segment and the second line segment that constitute the closed boundary, and the third line segment connected to both ends of the first line segment and the second line segment, comprises:
determining at least two target points in the first set of points and at least two reference points in the second set of points based on the positional relationship between the closed boundary and the movement path;
dividing the closed boundary into the first line segment and the second line segment based on the at least two target points;
processing the movement path into a valid line segment according to based on the at least two reference points; and
obtaining the third line segment connected to both ends of the first line segment and the second line segment based on the at least two target points and the valid line segment.

3. The map boundary editing method according to claim 2, wherein a distance between each target point in the first set of points and at least one reference point in the second set of points is less than a first threshold.

4. The map boundary editing method according to claim 2, further comprising:
in response to a second instruction, enlarging and displaying a region corresponding to the closed boundary; and
receiving indication information, the indication information being used to determine the at least two target points.

5. The map boundary editing method according to any one of claims 1 to 4, further comprising:
when a closed contour exists in the movement path and an area of the closed contour is less than a second threshold and/or a perimeter of the closed contour is less than a third threshold, deleting points in the movement path corresponding to the closed contour; or
when the closed contour exists in the movement path and the area of the closed contour is greater than a fourth threshold and/or a perimeter of the closed contour is greater than a fifth threshold, returning to the step of acquiring the movement trajectory information.

6. The map boundary editing method according to any one of claims 1 to 4, wherein determining the replacement line segment between the first line segment and the second line segment comprises:
in response to a third instruction, obtaining the replacement line segment between the first line segment and the second line segment.

7. The map boundary editing method according to any one of claims 1 to 4, wherein determining the replacement line segment between the first line segment and the second line segment comprises:
determining the replacement line segment between the first line segment and the second line segment based on a first relative positional relationship between the first line segment and the third line segment, and a second relative positional relationship between the second line segment and the third line segment; or
determining the replacement line segment between the first line segment and the second line segment based on a first area of a first closed contour formed by the first line segment and the third line segment, and a second area of a second closed contour formed by the second line segment and the third line segment; or
determining the replacement line segment between the first line segment and the second line segment based on a first perimeter of the first closed contour formed by the first line segment and the third line segment, and a second perimeter of the second closed contour formed by the second line segment and the third line segment.

8. A map boundary editing apparatus, comprising:
a first acquisition unit configured to acquire current map information, wherein the map information comprises a closed boundary of a map;
a first response unit configured to, in response to a first instruction, enter an editing state of the closed boundary;
a second acquisition unit configured to acquire movement trajectory information, wherein the movement trajectory information comprises a movement path;
a first determination unit configured to, based on a positional relationship between the closed boundary and the movement path, determine a first line segment and a second line segment that constitute the closed boundary, and a third line segment connected to both ends of the first line segment and the second line segment;
a second determination unit configured to determine a replacement line segment between the first line segment and the second line segment; and
a replacement unit configured to replace the replacement line segment with the third line segment to edit the closed boundary.

9. The map boundary editing apparatus according to claim 8, wherein the closed boundary is obtained by connecting a first set of points having positioning information, and the movement path is obtained by connecting a second set of points having positioning information;
wherein the first determination unit is configured to:
determine, at least two target points in the first set of points and at least two reference points in the second set of points based on the positional relationship between the closed boundary and the movement path;
divide the closed boundary into the first line segment and the second line segment based on the at least two target points;
process the movement path into a valid line segment based on the at least two reference points; and obtain the third line segment connected to both ends of the first line segment and the second line segment based on the at least two target points and the valid line segment.

10. The map boundary editing apparatus according to claim 9, wherein a distance between each target point in the first set of points and at least one reference point in the second set of points is less than a first threshold.

11. The map boundary editing apparatus according to claim 9, further comprising a second response unit and a receiving unit, wherein:
the second response unit is configured to, in response to a second instruction, enlarge and display a region corresponding to the closed boundary; and
the receiving unit is configured to receive indication information, the indication information being used to determine the at least two target points.

12. The map boundary editing apparatus according to any one of claims 8 to 11, further comprising a deletion unit and an invoking unit, wherein:
the deletion unit is configured to, when a closed contour exists in the movement path and an area of the closed contour is less than a second threshold and/or a perimeter of the closed contour is less than a third threshold, delete points in the movement path corresponding to the closed contour; and
the invoking unit is configured to, when the closed contour exists in the movement path and the area of the closed contour is greater than a fourth threshold and/or a perimeter of the closed contour is greater than a fifth threshold, invoke the second acquisition unit.

13. The map boundary editing apparatus according to any one of claims 8 to 11, wherein the second determination unit is configured to, in response to a third instruction, obtain the replacement line segment between the first line segment and the second line segment; or
the second determination unit is configured to determine the replacement line segment between the first line segment and the second line segment based on a first relative positional relationship between the first line segment and the third line segment, and a second relative positional relationship between the second line segment and the third line segment; or
the second determination unit is configured to determine the replacement line segment between the first line segment and the second line segment based on a first area of a first closed contour formed by the first line segment and the third line segment, and a second area of a second closed contour formed by the second line segment and the third line segment; or
the second determination unit is configured to determine the replacement line segment between the first line segment and the second line segment based on a first perimeter of the first closed contour formed by the first line segment and the third line segment, and a second perimeter of the second closed contour formed by the second line segment and the third line segment.

14. A computer device comprising: a memory storing a computer program; and a processor operatively coupled to the memory, wherein the computer program, when executed by a processor, carries out a step of the map boundary editing method of any one of claims 1 to 7.

15. A non-transitory computer-readable storage medium storing a computer program,wherein the computer program, when executed by a processor, carries out a step of the map boundary editing method of any one of claims 1 to 7.
